# EUROPÄISCHE PATENTSCHRIFT

(11) **EP 1 219 164 B1**
(45) Veröffentlichungstag und Bekanntmachung des Hinweises auf die Patenterteilung: **06.12.2006**
(21) Anmeldenummer: 01128861.0
(22) Anmeldetag: 05.12.2001
(51) Int. Cl.: A01F 12/44, A01D 41/12

(54) **Vorrichtung und Verfahren zur Erntegutförderung in landwirtschaftlichen Arbeitsmaschinen**
Method and device for conveying crop in an agricultural machine
Procédé et dispositif pour convoyer des récoltes dans une machine agricole

(30) Priorität: 21.12.2000 DE 10064356
(43) Veröffentlichungstag der Anmeldung: 03.07.2002
(73) Patentinhaber: CLAAS Selbstfahrende Erntemaschinen GmbH, 33428 Harsewinkel (DE)
(72) Erfinder: Kühn, Bodo, 33330 Gütersloh (DE); Heidjann, Franz, 33428 Harsewinkel (DE)

(56) Entgegenhaltungen:
- EP-A- 0 212 270
- EP-A- 0 230 261
- EP-A- 0 357 090
- EP-A- 0 727 135
- EP-A- 0 958 727
- WO-A-01/01754
- WO-A-92/05687
- DE-A- 2 620 875
- DE-A- 3 934 226
- DE-A- 19 624 733
- FR-A- 800 875
- US-A- 2 708 582
- US-A- 4 617 942
- US-A- 4 637 406
- US-A- 4 913 679

## Beschreibung

Die Erfindung betrifft eine landwirtschaftliche Arbeitsmaschine mit wenigstens einer erntegutbearbeitenden Arbeitseinheit und dieser zugeordneten Ernteguttransporteinheiten gemäß dem Oberbegriff des Anspruchs 1 und ein Verfahren zum Betreiben einer landwirtschaftlichen Arbeitsmaschine nach dem Oberbegriff des Anspruchs 11.

Aus der deutschen Patentanmeldung DE 196 24 733 ist eine als Mähdrescher ausgeführte landwirtschaftliche Erntemaschine bekannt geworden, deren Dreschorganen im rückwärtigen Bereich eine als Hordenschüttler ausgeführte Korn-Stroh-Trenneinrichtung zugeordnet ist. Untenseitig wird die Korn-Stroh-Trenneinrichtung durch einen Rücklaufboden begrenzt, der an der Trenneinrichtung abgeschiedene Körner entgegen der Erntegutaustragrichtung auf einen Vorbereitungsboden fördert, der das an den Dreschorganen abgeschiedene Erntegut mit dem an der Trenneinrichtung abgeschiedenen Erntegut zusammenführt und an eine Reinigungseinrichtung übergibt, deren Siebelemente von einem durch ein Druckgebläse erzeugten Luftstrom durchflutet werden. Da derartige Reinigungseinrichtungen bei hohen Durchsatzleistungen schnell an ihre Grenzen gelangen, ist dem Rücklaufboden in seinem rückwärtigen Bereich ein Sauggebläse zugeordnet, welches Nichtkornbestandteile aus dem durch die Trenneinrichtung hindurchtretenden Erntegutstromes absaugen soll, sodass der Reinigungseinrichtung ein mit weniger Verunreinigungen durchsetztes Erntegutgemisch zugeführt wird. Aufgrund dessen, dass der Erntegutstrom des Rücklaufbodens und der auf dem Vorbereitungsboden befindliche Erntegutstrom entgegengesetzte Bewegungsrichtung haben, kommt es bei deren Aufeinandertreffen im Bereich zwischen Rücklauf- und Vorbereitungsboden zu starken Verwirbelungsvorgängen die dazu führen, dass der Erntegutstrom in diesem Bereich seine dem rückwärtigen Ende der landwirtschaftlichen Erntemaschine zustrebende Bewegungsrichtung verliert. Derartige Behinderungen des Erntegutflusses führen zu einer erheblichen Verschlechterung der Reinigungsleistung. Andererseits verhindert ein unterhalb der Trenneinrichtung angeordnetes Arbeitsorgan, dass der auf der Trenneinrichtung, der am Gebläse und an der Reinigungseinrichtung abgeschiedene Erntegutstrom auf einfache Weise wieder zusammengeführt werden können, um sie einer Zerkleinerungseinrichtung zuzuführen, die die verschiedenen Erntegutströme vermischt, zerkleinert und beispielsweise in Breitablage wieder auf dem Feld verteilt.

Gemäß der europäischen Patentschrift EP 0 314 695 gewinnen derartige Zerkleinerungs- und Mischeinrichtung jedoch zunehmend an Bedeutung, da immer häufiger auf die Verwertung des Getreidestrohs verzichtet wird, wobei das Getreidestroh den Verrottungsprozess beschleunigend gehäckselt auf dem Feld verteilt werden soll.

Die US 4 637 406 offenbart einen Mähdrescher mit einem Strohhäcksler, der einen Sog im Bereich einer Einlaßöffnung in den Strohhäcksler erzeugt. Am Ende des Obersiebs der Reinigungseinrichtung ist ein Druckgebläse angeordnet, das die am Ende des Obersiebs überlaufende Spreu mit Unterstützung des vom Strohhäcksler erzeugten Sogs pneumatisch in die Einlassöffnung des Strohhäckslers fördert. Der Strohhäcksler verteilt das gehäckselte Stroh und die Spreu zusammen auf dem Feld.

Der Erfindung liegt deshalb die Aufgabe zugrunde, eine landwirtschaftliche Arbeitsmaschine der eingangs genannten Art so weiterzubilden, dass die aus der landwirtschaftlichen Arbeitsmaschine abzugebenden Nichtkornbestandteile verwirbelungs- und störungsfrei die landwirtschaftliche Arbeitsmaschine durchlaufen und wahlweise zusammen oder voneinander getrennt und sich nicht gegenseitig beeinflussend aus der landwirtschaftlichen Arbeitsmaschine ausgetragen werden können.

Erfindungsgemäß wird die Aufgabe durch eine landwirtschaftliche Arbeitsmaschine mit den kennzeichnenden Merkmalen des Anspruchs 1 und einem Verfahren zum Betreiben einer landwirtschaftlichen Arbeitsmaschine mit den kennzeichnenden Merkmalen des Anspruchs 11 gelöst.

Indem der Reinigungseinrichtung und den wenigstens zwei Ernteguttransporteinheiten ein Sauggebläse so im rückwärtigen Bereich in vertikaler Richtung zugeordnet ist, dass neben der Abförderung des von dem Druckgebläse geförderten Luftstromes im Bereich der Fallstufe zwischen den Ernteguttransporteinheiten ein in Richtung des Sauggebläses gerichteter Luftstrom erzeugt wird, ist sichergestellt, dass die wenigsten zwei im Bereich der Fallstufe zusammenkommenden entgegengesetzte Bewegungsrichtung aufweisenden Erntegutströme keine den Gutfluss behindernde Verwirbelungen ausbilden. Neben der Vermeidung von Gutstaus innerhalb der landwirtschaftlichen Arbeitsmaschine führt dies außerdem zu einer verbesserten Reinigungsleistung.

In einer vorteilhaften Weiterbildung der Erfindung kann das Sauggebläse als Erntegutzerkleinerer ausgeführt sein, sodass die in den Erntegutzerkleinerer einlaufenden Erntegutströme untereinander vermischt und langstückiges Gut, wie beispielsweise Stroh, die Verrottung begünstigend in kurze Stücke zerkleinert wird.

Damit der in dem Bereich der Fallstufe zwischen den wenigstens zwei Ernteguttransporteinheiten hindurchtretende und zum Ende der landwirtschaftlichen Arbeitsmaschine gerichtete Luftstrom an sich ändernde Erntebedingungen angepasst werden kann, ist in einer weiteren vorteilhaften Ausgestaltung der Erfindung vorgesehen, dass der Luftstrom einstellbar ist.

Eine besonders effiziente Anpassung der Geschwindigkeit des Luftstromes an die Erntebedingungen wird dann erreicht, wenn die Geschwindigkeit in Abhängigkeit von der Gutart und dem Durchsatz erfolgt, da diese beiden Parameter einen bestimmenden Einfluss auf das Separationsergebnis einer Reinigungseinrichtung haben.

Auf konstruktiv einfache Weise kann die Einstellung der erforderlichen Geschwindigkeit des Luftstromes dadurch erreicht werden, dass die Drehzahl des Sauggebläses verändert wird.

Damit die momentane Geschwindigkeit des Luftstromes mit ausreichender Genauigkeit bestimmbar ist, wird in einer weiteren vorteilhaften Ausgestaltung der Erfindung vorgeschlagen, die Luftgeschwindigkeit im Bereich der Fallstufe mittels an sich bekannter Luftgeschwindigkeitsmesser zu erfassen, die dann über eine Regelstrecke zu einer Anpassung der Luftgeschwindigkeit im Bereich der Fallstufe führt.

Eine besonders einfache Ausführung der Regelstrecke ergibt sich dann, wenn eine definierte Luftgeschwindigkeit in Abhängigkeit von gutspezifischen Parametern voreingestellt wird und der im Bereich der Fallstufe ermittelte Geschwindigkeitswert hinreichend oft mit diesem voreingestellten Geschwindigkeitswert verglichen und wenn erforderlich, wieder an diesen angepasst wird. Eine sehr gut an sich ändernde Erntegutparameter angepasste Regelung der Geschwindigkeit des Luftstromes im Bereich der Fallstufe wird dann erreicht, wenn die Regelung in Abhängigkeit von den gutspezifischen Parametern Gutart und Gutfeuchte erfolgt.

Um eine gerichtete Verteilung des das als Erntegutzerkleinerer ausgeführte Sauggebläse durchlaufenden Erntegutstromes auf dem Feld zu erreichen, kann dem Erntegutzerkleinerer eine an sich bekannte Erntegutverteileinrichtung zugeordnet sein, die den zerkleinerten Erntegutstrang gleichmäßig über die Arbeitsbreite der landwirtschaftlichen Arbeitsmaschine verteilt auf dem Feld ausbreitet.

Damit auch im Abgabebereich der landwirtschaftlichen Arbeitsmaschine ein kontinuierlicher gutstauvermeidender Gutfluss realisierbar ist und die landwirtschaftliche Arbeitsmaschine eine hohe Flexibilität in der Art der auszutragenden Erntegutströme aufweist, kann die der landwirtschaftlichen Arbeitsmaschine zugeordnete Erntegutverteileinrichtung so ausgeführt sein, dass die die landwirtschaftliche Erntemaschine durchlaufenden Erntegutströme in Breit- oder Schwadablage auf das Feld abgegeben werden können. In erfindungsgemäßer Weise kann die landwirtschaftliche Arbeitsmaschine so betrieben werden, dass einerseits ein Erntegutschwad geformt wird und andererseits aus der Erntegutverteileinrichtung ein emteguthaltiger Luftstrom herausgefördert werden kann, ohne dass dieser Luftstrom dass zuvor geformte Erntegutschwad aufwirbelt. In besonders einfacher Weise wird dieses Verfahren dadurch ermöglicht, dass die Erntegutverteileinrichtung den von ihr geförderten ernteguthaltigen Luftstrom zu dem Erntegutschwad versetzt aus der landwirtschaftlichen Arbeitsmaschine herausbewegt. Somit wird es möglich, langhalmiges Stroh zur späteren Verwendung im Schwad abzulegen, während kurzhalmiges Stroh und Spreu gesondert aus der landwirtschaftlichen Arbeitsmaschine abgesaugt werden kann.

Besonders effektiv können die landwirtschaftliche Arbeitsmaschinen nach dem Verfahren betrieben werden, wenn die Abgabe des ernteguthaltigen Luftstromes so stark seitlich zum bereits abgelegten Erntegutschwad erfolgt, dass eine gegenseitige Beeinflussung vollständig unterbleibt.

Eine das erfindungsgemäße Verfahren in besonders einfacher Weise realisierende landwirtschaftliche Arbeitsmaschine ergibt sich dann, wenn dem Sauggebläse wenigstens ein Erntegutleitelement zugeordnet ist, welches den Zugang zum Sauggebläse zumindest teilweise verschließt und die dem Sauggebläse nachgeordnete Erntegutverteileinrichtung wenigstens über einem Teil ihrer Arbeitsbreite das Austreten des ernteguthaltigen Luftstromes unterbinden kann. Auf diese Weise wird es möglich, dass ein Teil des die landwirtschaftliche Arbeitsmaschine durchlaufenden Erntegutes unter Umgehung des Sauggebläses ausgetragen und in einem Schwad abgelegt werden kann, während der ernteguthaltige Luftstrom so aus dem Sauggebläse herausförderbar ist, dass er mit dem auf dem Boden abgelegten Erntegutschwad nicht in Kontakt kommt.

Eine konstruktive besonders einfache Ausführung ergibt sich dann, wenn das Verschließen wenigstens eines Teils der Abgabebreite der Erntegutverteileinrichtung durch in ihrer Lage veränderbare Gutleitstege erfolgt.

In vorteilhafter Weiterbildung der Erfindung können der Erntegutverteileinrichtung auch mehrere Gutleitstege zugeordnet sein, die zur Vereinfachung ihrer Lageänderung in rechts- und linksseitige Gruppen aufgeteilt sein können und von einem gemeinsamen Verstellmechanismus gesteuert werden.

Da das Erntegutschwad in aller Regel mittig hinter der landwirtschaftlichen Arbeitsmaschine auf dem Boden abgelegt wird, ist der verschließbare Gutleitkanal ebenfalls mittig an der Erntegutverteileinrichtung angeordnet.

Damit der verschließbare Gutleitkanal eine möglichst große Ausdehnung quer zur Fahrtrichtung hat ist es notwendig, dass die diesen Gutleitkanal begrenzenden Gutleitstege einen relativ großen Abstand zueinander einnehmen müssen. Damit nun aber auch beim Betreiben der Erntegutverteileinrichtung in der Arbeitstellung "Breitablage" eine sichere Führung des ernteguthaltigen Luftstromes in der Erntegutverteileinrichtung gewährleistet ist, können diesem verschließbaren Gutleitkanal weitere Gutleitstege zugeordnet sein, die beim Betreiben der Erntegutverteileinrichtung in der Arbeitstellung "Schwadablage" hinter die diesen Gutleitkanal verschließenden Gutleitstege zurückschwenken.

Um den Verstellaufwand für die Gutleitstege zu begrenzen kann den Gutleitstegen der Erntegutverteileinrichtung ein Koppelmechanismus zugeordnet sein, der durch händisches oder ferngesteuertes Betätigen alle mit dem Koppelmechanismus verbundenen Gutleitstege gleichzeitig in ihrer Lage verstellt.

Um eine möglichst große Flexibilität in der einstellbaren Gutaustragrichtung zu erhalten, können die Gutleitelemente der Erntegutverteileinrichtung eine geradlinige oder gekrümmte Gestalt aufweisen und über einen großen Schwenkbereich von einer annähernd entgegen der Fahrtrichtung weisenden in eine hierzu annähernd senkrechte Position verschwenkbar sein.

Weitere vorteilhafte Ausgestaltungen sind Gegenstand weiterer Unteransprüche und werden nachfolgend anhand von Zeichnungen näher erläutert.

Es zeigen:
- Figur 1: eine erfindungsgemäße landwirtschaftliche Arbeitsmaschine in der Seitenansicht
- Figur 2: eine Detailansicht der erfindungsgemäßen Steuer- und Regelstrecke
- Figur 3: eine Detailansicht der erfindungsgemäßen Erntegutverteileinrichtung in der Arbeitsstellung "Breitablage" in der Draufsicht
- Figur 4: eine Detailansicht der erfindungsgemäßen Erntegutverteileinrichtung in der Arbeitsstellung "Seitenablage" in der Draufsicht

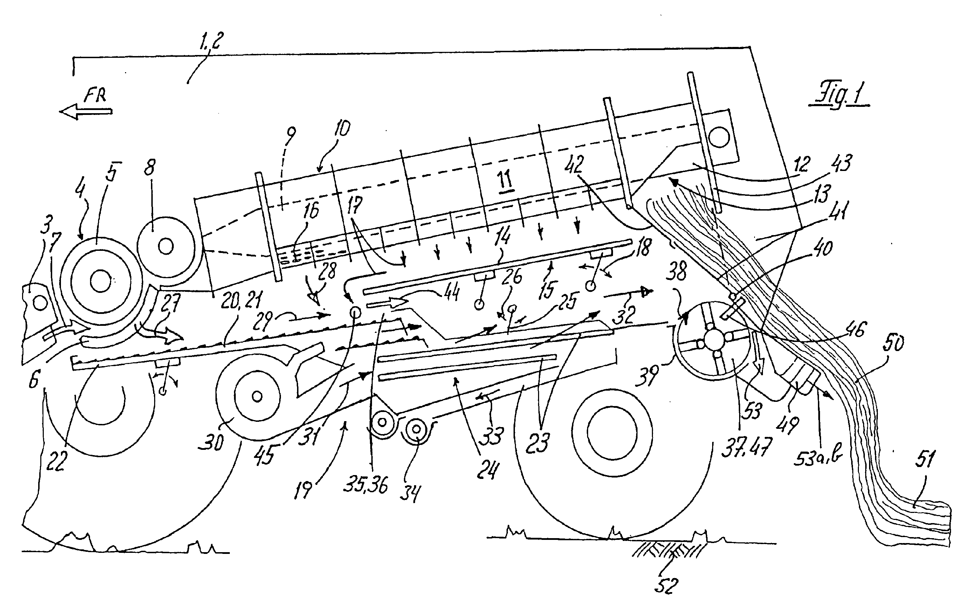

In Figur 1 ist eine als Mähdrescher 2 ausgeführte landwirtschaftliche Arbeitsmaschine 1 dargestellt, der an ihrem in Fahrtrichtung FR weisenden frontseitigen Ende ein Schrägförderer 3 zugeordnet ist, der das in an sich bekannter und deshalb nicht näher dargestellter Weise geerntete Gut einem Eintrommeldreschwerk 4 zuführt. Der zwischen der Dreschtrommel 5 und dem Dreschkorb 6 hindurchgeführte Erntegutstrom 7 wird im rückwärtigen Bereich der Dreschtrommel 5 von einer Übergabetrommel 8 übernommen, die den Erntegutstrom 7 an ein nachgeordnetes als Axialtrennrotor 9 ausgeführtes Korn-Stroh-Trennorgan 10 übergibt, dessen innenliegender von einem Rotorgehäuse 11 wenigstens teilweise ummantelter Trennrotor 12 aufgrund seiner Drehbewegung den Erntegutstrang 7 zwischen Trennrotor 12 und Rotorgehäuse 11 in den rückwärtigen Bereich des Trennrotors 12 fördert. Im rückwärtigen Bereich des Trennrotors 12 verfügt das Rotorgehäuse 11 über eine untenseitige Öffnung 13 durch die der zwischen Trennrotor 12 und Rotorgehäuse 11 geförderte Erntegutstrom 7 wieder aus dem Axialtrennrotor 9 austreten kann.

Dem Axialtrennrotor 9 ist untenseitig eine als Rücklaufboden 14 ausgeführte erste Ernteguttransporteinheit 15 in einer in vertikaler Richtung geneigten Lage zugeordnet, die den durch die Öffnungen 16 des Rotorgehäuses 11 abgeschiedenen Erntegutstrom 17 auffängt. Der Rücklaufboden 14 ist gemäß Pfeilrichtung 18 schwingend angetrieben, sodass das von ihm aufgefangene Erntegut 17 allmählich zum frontseitigen Ende des Rücklaufbodens 14 gefördert und schließlich schwerkraftbedingt abgegeben wird.

Unterhalb des Eintrommeldreschwerks 4, der Übergabetrommel 8 und dem Axialtrennrotor 9 mit untenseitigem Rücklaufboden 14 ist eine Erntegutvorbereitungs- und Reinigungseinrichtung 19 angeordnet, deren Vorbereitungsboden 20 über eine Rahmenkonstruktion 22 mit einer im Ausführungsbeispiel mehrere Siebebenen 23 aufweisenden Reinigungseinrichtung 24 drehfest verbunden ist. Die den Vorbereitungsboden 20 und die Siebebenen 23 aufnehmende Rahmenkonstruktion 22 ist mittels Schwingen 25 drehbar in der landwirtschaftlichen Arbeitsmaschine 1 gelagert, wobei sich die Drehbewegung der Rahmenkonstruktion 22 auf ein Schwingen gemäß der Pfeile 26 beschränkt.

Der Vorbereitungsboden 20 nimmt eine in vertikaler Richtung geneigte Lage ein und erstreckt sich unterhalb des Eintrommeldreschwerks 4 entlang der Übergabetrommel 8 bis in den frontseitigen Endbereich des dem Axialrotor 9 untenseitig zugeordneten Rücklaufbodens 14. Der Vorbereitungsboden 20 nimmt somit den im Bereich des Eintrommeldreschwerks 4 abgeschiedenen Erntegutstrom 27, den im vorderen Bereich des Axialtrennrotors 9 abgeschiedenen Erntegutstrom 28 und den vom Rücklaufboden kommenden Erntegutstrom 17 auf. Durch die Schwingbewegung 26 des Vorbereitungsbodens 20 führt dieser die Teilerntegutströme 27, 28, 17 zusammen und fördert sie als einen gemeinsamen Erntegutstrom 29 zu seinem rückwärtigen Ende, sodass der Vorbereitungsboden 20 die wenigsten eine weitere Ernteguttransporteinheit 21 der landwirtschaftlichen Erntemaschine 1 bildet.

Im rückwärtigen Bereich des Vorbereitungsbodens 20 wird der Erntegutstrom 29 an die eine oder mehreren Siebebenen 23 der Reinigungseinrichtung 24 übergeben und aufgrund deren Schwingbewegung 26 in den der Fahrtrichtung FR der landwirtschaftlichen Arbeitsmaschine 1 abgewandten Endbereich der Reinigungseinrichtung 24 gefördert. Um die Reinigungsleistung der Siebebenen 23 zu erhöhen ist diesen Siebebenen 23 ein Druckgebläse 30 zugeordnet, dessen Luftstrom 31 die Siebebenen 23 durchflutet und leichte Bestandteile 32 des Erntegutstromes 29 in den rückwärtigen Bereich des Mähdreschers 2 fördert, während die in dem vom Vorbereitungsboden 20 kommenden Erntegutstrom 29 befindlichen Körner 33 an den Siebebenen 23 abgeschieden und von Förderorganen 34 aus dem Bereich der Reinigungseinrichtung 24 herausgefördert werden.

Aufgrund des vertikalen Versatzes zwischen Rücklaufboden 14 und Vorbereitungsboden 20 bildet sich in deren einander zugewandten Endbereichen eine einen Durchgangsspalt 35 begrenzende Fallstufe 36 aus, in der die einander entgegengesetzt bewegten Erntegutströme 17, 27 des Rücklaufbodens 14 und des Vorbereitungsbodens 20 zu einem gemeinsamen Erntegutstrom 29 zusammengeführt werden. Während dieses Vermischvorganges kann es zu Verwirbelungen kommen, die den Gutfluss im Bereich der Fallstufe 36 erheblich behindern und unter Umständen ganz zum Erliegen bringen. Die damit verbundenen Probleme vermeidend, ist der als Mähdrescher 2 ausgeführten landwirtschaftlichen Arbeitsmaschine 1 in ihrem rückwärtigen Bereich ein Sauggebläse 37 zugeordnet, welches gemäß Pfeilrichtung 38 umläuft und wenigstens teilweise von einer in Figur 1 nur schematisch angedeuteten Ummantelung 39 umgeben ist. Obenseitig ist dem Sauggebläse ein um eine quer zur Fahrtrichtung FR weisende Achse 40 schwenkbares Erntegutleitelement 41 zugeordnet, welches einenends entweder mit einem gestellfest und unterhalb der Rotorgehäuseöffnung 13 angeordneten Leitblech 42 oder mit einem im rückwärtigen Bereich des Korn-Stroh-Trennorgans 10 angeordneten Verschlussblech 43 in Wirkverbindung bringbar ist. Erfindungsgemäß ist das Sauggebläse 37 den wenigstens zwei Ernteguttransporteinheiten 15, 21 und der Reinigungseinrichtung 24 so im rückwärtigen Bereich in vertikaler Richtung zugeordnet, dass es den von dem Druckgebläse 30 durch die Siebebenen 23 der Reinigungseinrichtung 24 bewegten Luftstrom 31 abfördert und zusätzlich einen weiteren Luftstrom 44 erzeugt, der den Durchgangsspalt 35 im Bereich der Fallstufe 36 in Richtung des Sauggebläses 37 durchströmt, um ein Verwirbeln der in diesem Bereich aufeinandertreffenden Erntegutströme 17, 27 zu vermeiden und deren gerichtete Bewegung in den rückwärtigen Bereich der landwirtschaftlichen Arbeitsmaschine 1 zu unterstützen.

Gemäß Figur 1 kann der Rotor 45 des Sauggebläses 37 umfangsseitig eine Vielzahl an sich bekannte Schneidmesser 44 aufweisen, die mit an der landwirtschaftlichen Arbeitsmaschine 1 angeordneten Gegenschneiden 46 zusammenarbeiten, sodass das Sauggebläse 37 zudem als Erntegutzerkleinerer 47 ausgebildet ist.

Damit der von dem Sauggebläse 37 im Bereich der Fallstufe 36 erzeugte Luftstrom 44 auf einfache Weise an verschiedene Erntebedingungen anpassbar ist, kann die Geschwindigkeit des Luftstromes 44 im Bereich der Fallstufe 36 verändert werden, wobei eine besonders gute Anpassung an den durch die Fallstufe 36 geförderten Erntegutstrom 29 dann erreicht wird, wenn die Geschwindigkeit des Luftstromes 44 gutart- und/oder durchsatzabhängig erfolgt, wobei die hierfür erforderliche und an sich bekannte Sensorik 45 im Bereich der Fallstufe 36 anzuordnen wäre.

Im einfachsten Fall kann die Veränderung der Geschwindigkeit des Luftstromes 44 im Bereich der Fallstufe 36 dadurch erreicht werden, dass im Bereich der Fallstufe 36 ein oder mehrere an sich bekannte Luftgeschwindigkeitsmesser 45 angeordnet sind, die die Geschwindigkeit des Luftstromes 44 sensieren und den gemessenen Wert X1 einer Steuer- und Regelungseinheit 46 zuführen. Der Steuer- und Regelungseinheit 46 wurde zuvor ein anzusteuernder Geschwindigkeitswert X2 für den Luftstrom 44 zugeordnet, der in der Steuer- und Regelungseinheit 46 mit der momentanen Geschwindigkeit des Luftstromes 44 verglichen wird, wobei die Steuer- und Regelungseinrichtung 46 bei Abweichungen eine Anpassung der Geschwindigkeit des Luftstromes 44 vornimmt. Im einfachsten Fall kann die Anpassung der Geschwindigkeit des Luftstromes 44 an den voreingestellten Geschwindigkeitswert X2 dadurch erreicht werden, dass die Steuer- und Regelungseinrichtung 46 ein Ausgangssignal Y1 generiert, welches entweder die Drehzahl des Sauggebläses 37 erhöht, wenn die Geschwindigkeit des Luftstromes 44 unter dem voreingestellten Geschwindigkeitswert X2 liegt oder die Drehzahl des Sauggebläses 37 reduziert, wenn die Geschwindigkeit des Luftstromes 44 über dem voreingestellten Geschwindigkeitswert X2 liegt. Es liegt im Rahmen der Erfindung, dass der voreingestellte Geschwindigkeitswert X2 auch ein oder mehrere Geschwindigkeitsbereiche umfassen kann und das von der Steuer- und Regelungseinrichtung 46 generierte Ausgangssignal Y1 ein elektrisches, mechanisches, hydraulisches oder pneumatisches Ausgangssignal Y1 sein kann, wobei die hierfür erforderlichen Übertragungssysteme 48 an sich bekannt und deshalb nicht näher beschrieben sind.

Damit der voreingestellte Geschwindigkeitswert X2 hinreichend genau an die jeweiligen Erntebedingungen angepasst ist, kann dieser voreingestellte Geschwindigkeitswert X2 in Abhängigkeit von gutspezifischen Parametern definiert sein, wobei als gutspezifische Parameter insbesondere die Gutart und die Gutfeuchte herangezogen werden.

Um das den Erntegutzerkleinerer 47 durchlaufende Erntegut in dessen rückwärtigen Bereich ohne Gutstauerscheinungen und in der Austragrichtung beeinflussbar abgeben zu können, ist dem Erntegutzerkleinerer 47 in diesem Bereich eine Erntegutverteileinrichtung 49 in noch näher zu beschreibender Weise zugeordnet.

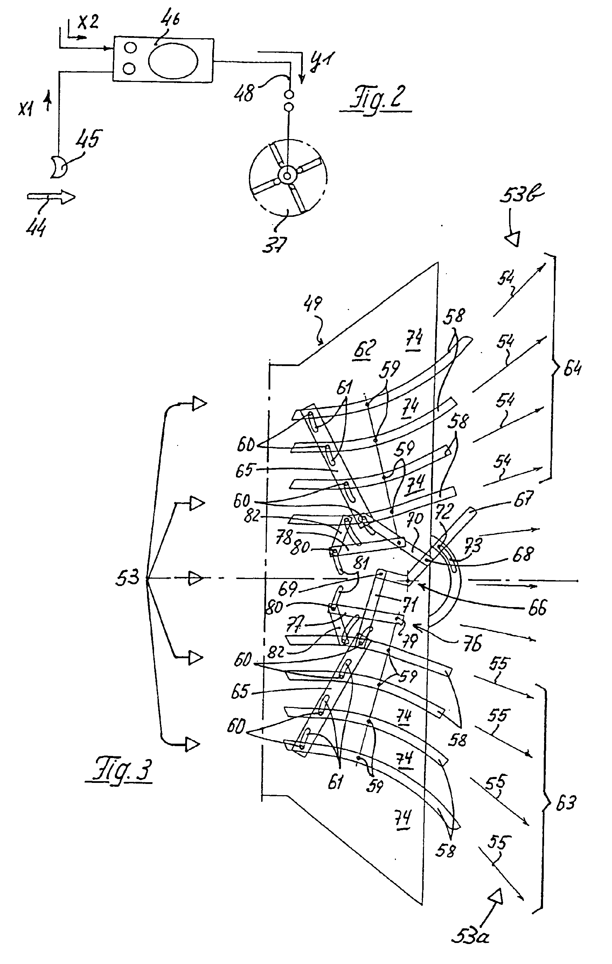

Das obenseitig dem Erntegutzerkleinerer 47 verschwenkbar zugeordnete Erntegutleitelement 41 nimmt in einer ersten Schwenkposition (ausgezeichnete Darstellung in Fig. 1) eine Lage ein, in der der aus der Öffnung 13 des Rotorgehäuses 11 austretende Erntegutstrang 50, im wesentlichen Langstroh, oberhalb des Erntegutzerkleinerers 47 und der Erntegutverteileinrichtung 49 entlanggeführt und als Schwad 51 auf dem Boden 52 abgelegt wird. In einer zweiten Schwenkposition (gestrichelte Darstellung in Fig. 2) gibt das Erntegutleitelement 41 den Erntegutzerkleinerer 47 obenseitig frei, sodass das aus der Öffnung 13 des Rotorgehäuses 11 austretende Erntegut 50 gemeinsam mit dem aus der Reinigungseinrichtung 24 abgeförderten Erntegutsrom 32 den Erntegutzerkleinerer 47 durchläuft und zerkleinert an die Erntegutverteileinrichtung 49 übergeben wird.

Damit der von dem Erntegutzerkleinerer 47 an die Erntegutverteileinrichtung 49 übergebene Erntegutstrom 53 in seiner Austragrichtung 54-57 einstellbar ist, sind der Erntegutverteileinrichtung 49 innenseitig gekrümmte Gutleitstege 58 um am Gehäuse 62 befestigte Achsen 59 schwenkbar zugeordnet. Eine unproblematische Verstellung mehrerer Gutleitstege 58 wird dann möglich, wenn den Gutleitstegen 58 einenends Führungsbolzen 60 angeformt sind, die jeder für sich in bogenförmigen Langlochschlitzen 61 des Gehäuses 62 geführt werden und die mehreren Gutleitstege 58 zu Gruppen 63, 64 zusammengefasst sind, wobei die Gruppen 63, 64 von Gutleitstegen 58 spiegelbildlich zur Mitte der Erntegutverteileinrichtung 49 angeordnet sind und die Führungsbolzen 60 der Gutleitstege 58 jeder Gruppe 63, 64 außerhalb des Gehäuses 62 durch Führungsstege 65 miteinander verbunden werden. Auf diese Weise wird es möglich beide Gruppen 63, 64 von Gutleitstegen 58 durch einen einzigen Koppelmechanismus 66 um die jeweiligen Achsen 59 in verschiedene Positionen zu verschwenken. Zur Vermeidung von Störungen des Gutflusses innerhalb der Erntegutverteileinrichtung 49 ist der Koppelmechanismus 66 außerhalb des Gehäuses 62 angeordnet. Der Koppelmechanismus 66 wird von einem drehbar am Gehäuse 62 der Erntegutverteileinrichtung 49 angeordneten Zentralhebel 67 gebildet, dem erste und zweite Schwenkachsen 68, 69 zugeordnet sind, die zudem Koppelglieder 70, 71 drehbar aufnehmen, die anderenends ebenfalls drehbar mit wenigstens einem Führungsbolzen 60 eines Gutleitsteges 58 jeder Gruppe 63, 64 von Gutleitstegen 58 schwenkbar verbunden sind. Auf diese Weise wird es möglich durch händisches oder fernbetätigtes Verstellen des mittels Bolzen 72 in einer dem Gehäuse 62 der Erntegutverteileinrichtung 49 angeformten Schlitzführung 73 laufenden Zentralhebels 67 ein gleichzeitiges Verschwenken aller Gutleitstege 58 zu realisieren.

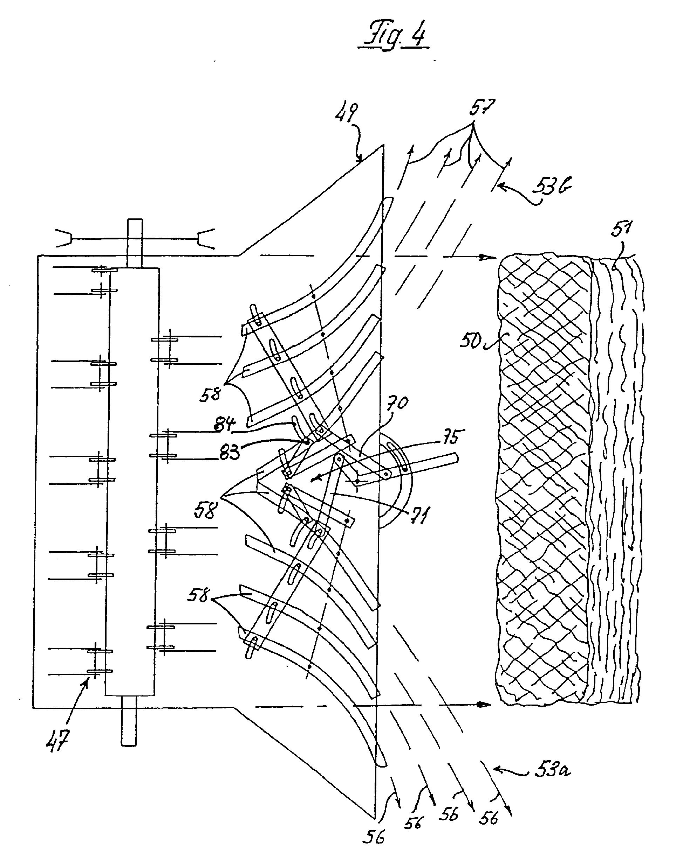

In einer ersten Stellung des Zentralhebels 67 gemäß Fig. 3 (Durchdringungszeichnung) bilden die Gutleitstege 58 in ihren Zwischenräumen Gutleitkanäle 74 aus, die das in die Erntegutverteileinrichtung 49 hineingeförderte Erntegut 53 entsprechend der jeweiligen Austragrichtung 54, 55 in Breitablage auf dem Boden 52 verteilen. Wird der Zentralhebel innerhalb der Schlitzführung 73 in die in Fig. 4 (Durchdringungszeichnung) dargestellte Position verschwenkt, verschieben die Koppelglieder 70, 71 die mit ihnen drehbar verbundenen Führungsbolzen 60 der jeweiligen Gutleitstege 58 innerhalb der Langlochschlitze 61, wobei die untereinander mittels der Führungsstege 65 gekoppelten Gutleitstege 58 in ihrer Lage quer zur Fahrtrichtung nach außen verschwenkt werden. Dies führt dazu, dass sich die von der Ausrichtung der Gutleitkanäle 74 abhängigen Gutaustragrichtungen 56, 57 ebenfalls quer zur Fahrtrichtung nach außen verschieben. In der Endlage gemäß Fig. 4 treffen die mit den Koppelgliedern 70, 71 verbundenen inneren Gutleitstege 58 im Bereich ihrer frontseitigen Enden aufeinander, sodass der von diesen Gutleitstegen 58 begrenzte Gutleitkanal 75 verschlossen wird und folglich durch diesen mittleren Gutleitkanal 75 kein ernteguthaltiger Luftstrom 53 mehr förderbar ist. Mit einer derartig gestalteten Erntegutverteileinrichtung 49 kann die landwirtschaftliche Arbeitsmaschine 1 in erfindungsgemäßer Weise so betrieben werden, dass der aus der Öffnung 13 des Rotorgehäuses 11 austretende Erntegutstrom 50 entlang des Leitblechs 42 und oberhalb des Erntegutleitelementes 41 sowie der Erntegutverteileinrichtung 49 aus der landwirtschaftlichen Erntemaschine herausgefördert und als Schwad 51 auf dem Boden 52 abgelegt werden kann, während der durch die Erntegutzerkleinerungseinrichtung 47 aus der landwirtschaftlichen Arbeitsmaschine 1 herauszufördernde ernteguthaltige Luftstrom 53 quer zur Fahrtrichtung FR und versetzt zu dem Erntegutschwad 51 seitlich aus der landwirtschaftlichen Erntemaschine 1 ausgeblasen wird. Auf diese Weise wird sichergestellt, dass der seitlich aus der landwirtschaftlichen Arbeitsmaschine 1 herausgeförderte ernteguthaltige Luftstrom 53 den bereits auf dem Boden 52 liegenden Erntegutschwad 51 nicht zerstört.

Da in der Arbeitstellung "Breitablage" (Fig. 3) die einander zugewandten Gutleitstege 58 der benachbarten Gruppen 63, 64 von Gutleitstegen 58 einen extrem breiten Gutleitkanal 76 ausbilden würden, sind den einander zugewandten äußeren Gutleitstege 58 der Gruppen 63, 64 von Gutleitstegen 58 je wenigstens ein weiterer Gutleitsteg 77, 78 zugeordnet, der nur in der Arbeitsstellung "Breitablage" mit dem ernteguthaltigen Luftstrom 53 in Kontakt kommt. In der Arbeitstellung "Seitenablage'' (Fig. 4) treten diese inneren Gutleitstege 77, 78 hinter die ihnen benachbarten Gutleitstege 58 der Gruppen 63, 64 von Gutleitstegen 58 zurück. Ein derartiges Verschwenken der inneren Gutleitstege 77, 78 wird dadurch erreicht, dass die inneren Gutleitstege 77, 78 einenends um eine Schwenkachse 79 drehbar am Gehäuse 62 der Erntegutverteileinrichtung 49 angeordnet sind und ihrem anderen Ende ebenfalls ein Führungsbolzen 80 angeformt ist, der wiederum eine in das Gehäuse 62 eingearbeitete Schlitzführung 81 durchsetzt. Obenseitig und außerhalb des Gehäuses nimmt der Führungsbolzen 80 einen Koppelsteg 82 drehbar auf, dessen anderes Ende von einem weitem Führungsbolzen 83 drehbeweglich durchsetzt wird. Dieser Führungsbolzen 83 kann sich ebenfalls innerhalb einer in das Gehäuse 62 eingearbeiteten Langlochführung 84 bewegen und ist untenseitig mit dem jeweils innen liegenden Gutleitsteg 58 der Gruppen 63, 64 von Gutleitstegen 58 drehfest verbunden. Auf diese Weise wird es möglich, dass bei Betätigung des Koppelmechanismus 66 die inneren Gutleitstege 77, 78 von einer Arbeitsstellung in eine Nichtarbeitsstellung und umgekehrt verschwenkt werden können.

Es liegt im Rahmen der Erfindung, dass das erfindungsgemäße Verfahren und die erfmdungsgemäßen Vorrichtungen 37, 49 nicht auf eine landwirtschaftliche Arbeitsmaschine 1 gemäß dem Ausführungsbeispiel beschränkt sind, sonder an beliebig ausgeführten Erntemaschinen, wie beispielsweise Mähdrescher mit Hordenschüttlern und/oder mehrtrommeligen Dreschwerken eingesetzt werden können um die beschriebenen Effekte zu erzielen.

Zudem liegt es Rahmen der Erfindung, wenn die bogenförmig dargestellten Gutleitstege 58 geradlinig und die geradlinigen Gutleitstege 77, 78 bogenförmig ausgeführt sind oder alle Gutleitstege 58, 77, 78 der Erntegutverteileinrichtung 49 krummlinige oder gerade Gestalt aufweisen.

### Bezugszeichenliste

- 1: landwirtschaftliche Arbeitsmaschine
- 2: Mähdrescher
- 3: Schrägförderer
- 4: Eintrommeldreschwerk
- 5: Dreschtrommel
- 6: Dreschkorb
- 7: Erntegutstrom
- 8: Übergabetrommel
- 9: Axialtrennrotor
- 10: Korn-Stroh-Trennorgan
- 11: Rotorgehäuse
- 12: Trennrotor
- 13: Öffnung
- 14: Rücklaufboden
- 15: Ernteguttransporteinheit
- 16: Öffnungen
- 17: Erntegutstrom
- 18: Pfeilrichtung
- 19: Vorbereitungs/Reinigungseinrichtung
- 20: Vorbereitungsboden
- 21: weitere Ernteguttransporteinheit
- 22: Rahmenkonstruktion
- 23: Siebebenen
- 24: Reinigungseinrichtung
- 25: Schwingen
- 26: Pfeilrichtung
- 27: Erntegutstrom
- 28: Erntegutstrom
- 29: Erntegutstrom
- 30: Druckgebläse
- 31: Luftstrom
- 32: leichte Bestandteile/Spreu
- 33: Körner
- 34: Förderorgane
- 35: Durchgangsspalt
- 36: Fallstufe
- 37: Sauggebläse
- 38: Pfeilrichtung
- 39: Ummantelung
- 40: Achse
- 41: Erntegutleitelement
- 42: Leitblech
- 43: Verschlussblech
- 44: Luftstrom
- 45: Luftgeschwindigkeitsmesser
- 46: Gegenschneide
- 47: Erntegutzerkleinerer
- 48: Übertragungssysteme
- 49: Erntegutverteileinrichtung
- 50: Erntegutstrang
- 51: Schwaden
- 52: Boden
- 53: Erntegutstrom
- 54-57: Austragrichtung
- 58: Gutleitsteg
- 59: Achse
- 60: Führungsbolzen
- 61: Langlochschlitz
- 62: Gehäuse
- 63: Gruppe von Gutleitelementen
- 64: Gruppe von Gutleitelementen
- 65: Führungssteg
- 66: Koppelmechanismus
- 67: Zentralhebel
- 68: Schwenkachse
- 69: Schwenkachse
- 70: Koppelglied
- 71: Koppelglied
- 72: Bolzen
- 73: Schlitzführung
- 74: Gutleitkanäle
- 75: Gutleitkanal
- 76: Gutleitkanal
- 77: Gutleitsteg
- 78: Gutleitsteg
- 79: Schwenkachse
- 80: Führungsbolzen
- 81: Schlitzführung
- 82: Koppelsteg
- 83: Führungsbolzen
- 84: Langlochführung

- FR: Fahrtrichtung
- X1: gemessene Geschwindigkeit
- X2: voreingestellte Geschwindigkeit
- Y1: Ausgangssignal

## Patentansprüche

1. Landwirtschaftliche Arbeitsmaschine mit wenigstens einer erntegutbearbeitenden Arbeitseinheit und einer dieser Erntegutbearbeitungseinheit zugeordneten ersten Ernteguttransporteinheit und wenigstens einer weiteren Erntguttransporteinheit, wobei die wenigstens zwei Ernteguttransporteinheiten zwischen sich einen Gutdurchgangsspalt ausbilden und die von den Ernteguttransporteinheiten geförderten Erntegutströme entgegengesetzte Förderrichtung aufweisen und den Ernteguttransporteinheiten eine ein Druckgebläse aufweisende Reinigungseinrichtung zugeordnet ist,
**dadurch gekennzeichnet,**
**dass** der Reinigungseinrichtung (19, 24) und den wenigstens zwei Ernteguttransporteinheiten (15, 21) ein Sauggebläse (37) so im rückwärtigen Bereich zugeordnet ist, dass neben der Abförderung des von dem Druckgebläse (30) geförderten Luftstromes (31) zusätzlich im Bereich der Fallstufe (36) zwischen den Ernteguttransporteinheiten (15, 21) ein in Richtung des Sauggebläses (37) gerichteter Luftstrom (44) erzeugt wird.

2. Landwirtschaftliche Arbeitsmaschine nach Anspruch 1,
**dadurch gekennzeichnet,**
**dass** das Sauggebläse (37) als Erntegutzerkleinerer (47) ausgebildet ist.

3. Landwirtschaftliche Arbeitsmaschine nach einem oder mehreren der vorhergehenden Ansprüche,
**dadurch gekennzeichnet,**
**dass** die Geschwindigkeit des von dem Sauggebläse (37) im Bereich der Fallstufe (36) zwischen den Ernteguttransporteinheiten (15, 21) erzeugten Luftstromes (44) einstellbar ist.

4. Landwirtschaftliche Arbeitsmaschine nach Anspruch 3,
**dadurch gekennzeichnet,**
**dass** die Einstellung der Geschwindigkeit des Luftstromes (44) gutart- und/oder durchsatzabhängig erfolgt.

5. Landwirtschaftliche Arbeitsmaschine nach Anspruch 3,
**dadurch gekennzeichnet,**
**dass** die Einstellung der Geschwindigkeit des Luftstromes (44) durch Veränderung der Drehzahl des Sauggebläses (37) erfolgt.

6. Landwirtschaftliche Arbeitsmaschine nach einem oder mehreren der vorhergehenden Ansprüche,
**dadurch gekennzeichnet,**
**dass** im Bereich der Fallstufe (36) zumindest ein an sich bekannter Luftgeschwindigkeitsmesser (45) angeordnet ist der über eine Regelstrecke (45, 46, 48, 37) die Geschwindigkeit des Luftstromes (44) im Bereich der Fallstufe (36) regelt.

7. Landwirtschaftliche Arbeitsmaschine nach Anspruch 6,
**dadurch gekennzeichnet,**
**dass** die Regelstrecke (45, 46, 48, 37) die Eingabe eines voreingestellten Geschwindigkeitswertes X2, die Ermittlung der Geschwindigkeit X1 des Luftstromes (44) sowie die Anpassung der Geschwindigkeit X1 des Luftstromes (44) an die voreingestellte Geschwindigkeit X2 umfasst.

8. Landwirtschaftliche Arbeitsmaschine nach Anspruch 7,
**dadurch gekennzeichnet,**
**dass** der voreingestellte Gutgeschwindigkeitswert X2 in Abhängigkeit von gutspezifischen Parametern definiert wird.

9. Landwirtschaftliche Arbeitsmaschine nach Anspruch 8,
**dadurch gekennzeichnet,**
**dass** die gutspezifischen Parameter die Gutart und/oder die Gutfeuchte sind.

10. Landwirtschaftliche Arbeitsmaschine nach einem oder mehreren der vorhergehenden Ansprüche,
**dadurch gekennzeichnet,**
**dass** dem Sauggebläse (37) eine Erntegutverteileinrichtung (49) zugeordnet ist.

11. Verfahren zur Verteilung wenigstens eines aus einer landwirtschaftlichen Arbeitsmaschine herausgeförderten Erntegutstromes, wobei die landwirtschaftlich Arbeitsmaschine eine oder mehrere erntegutbearbeitende Arbeitseinheiten aufnimmt und der oder den erntegutbearbeitenden Arbeitseinheiten wenigstens ein Sauggebläse zur Abförderung wenigstens einer Teilmenge des von den Arbeitsorganen bearbeiteten Erntegutes zugeordnet ist, wobei das Sauggebläse mit einer in ihrer Lage veränderbare Gutleitstege aufweisenden Erntegutverteileinrichtung in Wirkverbindung steht,
**dadurch gekennzeichnet,**
**dass** die Erntegutverteileinrichtung (49) in einer ersten Arbeitsstellung wenigstens einen ersten Erntegutstrom (32, 53) und einen zweiten Erntegutstrom (50, 53) aufnimmt und als gemeinsamen Erntegutstrom (53a, 53b) zur Breitablage austrägt und in zumindest einer zweiten Arbeitsstellung wenigstens einen der von den Arbeitseinheiten (10, 15, 19) geförderten und in Schwadform (51) auszubringenden Erntegutströme (50) nicht aufnimmt und den wenigstens einen aufgenommenen Erntegutstrom (32, 53) versetzt zu dem wenigstens einen nicht aufgenommenen Erntegutstrom (50) austrägt.

12. Verfahren zur Verteilung eines aus einer landwirtschaftlichen Arbeitsmaschine herausgeförderten Erntegutstromes nach Anspruch 11,
**dadurch gekennzeichnet,**
**dass** der wenigstens eine erste Erntegutstrom (32) im Wesentlichen durch Spreu und Kurzstroh gebildet wird.

13. Verfahren zur Verteilung eines aus einer landwirtschaftlichen Arbeitsmaschine herausgeförderten Erntegutstromes nach Anspruch 11,
**dadurch gekennzeichnet,**
**dass** der wenigstens eine zweite Erntegutstrom (50) im Wesentlichen durch Langstroh gebildet wird.

14. Verfahren zur Verteilung eines aus einer landwirtschaftlichen Arbeitsmaschine herausgeförderten Erntegutstromes nach einem oder mehreren der Ansprüche 11-13,
**dadurch gekennzeichnet,**
**dass** das Versetzten des wenigstens einen aufgenommenen Erntegutstromes (32, 53) zu dem wenigstens einen nicht aufgenommenen Erntegutstrom (50) quer zur Fahrtrichtung FR in einen Bereich erfolgt, in dem sich diese wenigstens zwei Erntegutströme (32, 53a, 53b, 50) nicht beeinflussen.

15. Verfahren zur Verteilung eines aus einer landwirtschaftlichen Arbeitsmaschine herausgeförderten Erntegutstromes nach einem oder mehreren der Ansprüche 11-14,
**dadurch gekennzeichnet,**
**dass** der wenigstens eine von der Erntegutverteileinrichtung (49) aufgenommene Erntegutstrom (32, 53) als Ernetgutstrom (53a, 53b) mit quer zur Fahrtrichtung FR weisender Austragrichtung (56, 57) wieder aus der Erntegutverteileinrichtung (49) austritt.

16. Landwirtschaftliche Arbeitsmaschine zur Durchführung des Verfahrens nach Anspruch 11,
**dadurch gekennzeichnet,**
**dass** das Sauggebläse (37) mit einem in seiner Stellung zum Sauggebläse (37) veränderbaren Erntegutleitelement (41) zusammenarbeitet und zumindest zwei zueinander benachbarte Gutleitstege (58, 77, 78) der Erntegutverteileinrichtung (49) durch Änderung ihrer Lage zueinander ein Verschließen des zwischen ihnen liegenden Gutleitkanals (75) bewirken, wobei sich die Gutaustragrichtung (54-57) des dem sich schließenden Gutleitkanal (75) wenigstens einen benachbarten Gutleitkanals (74) quer zur Fahrtrichtung FR verschiebt.

17. Landwirtschaftliche Arbeitsmaschine nach Anspruch 16,
**dadurch gekennzeichnet,**
**dass** die Gutleitelemente (58, 77, 78) in eine erste Gruppe (63) von Gutleitelementen (58, 78) und eine zweite Gruppe (64) von Gutleitelementen (58, 77) unterteilt sind und zumindest die jeweils benachbarten Gutleitelemente (58) der ersten und zweiten Gruppe (63, 64) von Gutleitelementen (58) zwischen sich einen verschließbaren Gutleitkanal (75) ausbilden.

18. Landwirtschaftliche Arbeitsmaschine nach einem oder mehreren der Ansprüche 16 und 17,
**dadurch gekennzeichnet,**
**dass** der verschließbare Gutleitkanal (75) mittig in der Erntegutverteileinrichtung (49) angeordnet ist.

19. Landwirtschaftliche Arbeitsmaschine nach Anspruch 18,
**dadurch gekennzeichnet,**
**dass** dem verschließbaren Gutleitkanal (75) weitere zwischen wenigstens einer EingriffStellung und zumindest einer Nichteingriffsstellung verschwenkbare Gutleitstege (77, 78) zugeordnet sind.

20. Landwirtschaftliche Erntemaschine nach einem oder mehreren der Ansprüche 16-19,
**dadurch gekennzeichnet,**
**dass** die Erntegutverteileinrichtung (49) eine Vielzahl von Gutleitkanälen (74-76) aufweist die von einer im Wesentlichen entgegen der Fahrtrichtung FR weisenden Gutaustragrichtung (54, 55) in eine quer zur Fahrtrichtung FR weisende Gutaustragrichtung (56, 57) und umgekehrt verstellbar sind.

21. Landwirtschaftliche Arbeitsmaschine nach einem oder mehreren der Ansprüche 16-20,
**dadurch gekennzeichnet,**
**dass** die Gutleitstege (58, 77, 78) gerade und/oder bogenförmig ausgeführt sind.

22. Landwirtschaftliche Arbeitsmaschine nach einem oder mehreren der Ansprüche 16-21,
**dadurch gekennzeichnet,**
**dass** die Gutleitstege (58, 77, 78) von einem gemeinsamen Koppelmechanismus (66) in ihrer Lage veränderbar angesteuert werden.

## Claims

1. An agricultural working machine comprising at least one crop material-processing working unit and a first crop material transport unit associated with said crop material-processing unit and at least one further crop material transport unit, wherein the at least two crop material transport units form a material through-flow gap between them and the crop material flows conveyed by the crop material transport units involve opposite conveying directions and a cleaning device having a forced draught fan is associated with the crop material transport units,
**characterised in that**
a suction fan (37) is associated with the cleaning device (19, 24) and the at least two crop material transport units (15, 21) in the rearward region in such a way that besides the discharge conveying action of the air flow (31) conveyed by the forced-draught fan (30) an air flow (44) directed in the direction of the suction fan (37) is additionally produced in the region of the fall step (36) between the crop material transport units (15, 21).

2. An agricultural working machine according to claim 1 **characterised in that** the suction fan (37) is in the form of a crop material comminutor (47).

3. An agricultural working machine according to one or more of the preceding claims **characterised in that** the speed of the air flow (44) produced by the suction fan (37) in the region of the fall step (36) between the crop material transport units (15, 21) is adjustable.

4. An agricultural working machine according to claim 3 **characterised in that** adjustment of the speed of the air flow (44) is effected in dependence on type of crop and/or through-put.

5. An agricultural working machine according to claim 3 **characterised in that** adjustment of the speed of the air flow (44) is effected by altering the rotary speed of the suction fan (37).

6. An agricultural working machine according to one or more of the preceding claims **characterised in that** arranged in the region of the fall step (36) is at least one per se known air speed measuring device (45) which by way of a regulating section (45, 46, 48, 37) regulates the speed of the air flow (44) in the region of the fall step (36).

7. An agricultural working machine according to claim 6 **characterised in that** the regulating section (45, 46, 48, 37) includes the input of a preset speed value X2, ascertaining the speed X1 of the air flow (44) and adaptation of the speed X1 of the air flow (44) to the preset speed X2.

8. An agricultural working machine according to claim 7 **characterised in that** the preset material speed value X2 is defined in dependence on material-specific parameters.

9. An agricultural working machine according to claim 8 **characterised in that** the material-specific parameters are the kind of crop and/or the crop moisture content.

10. An agricultural working machine according to one or more of the preceding claims **characterised in that** the crop material distributing device (49) is associated with the suction fan (37).

11. A method of distributing at least one crop material flow which is conveyed out of an agricultural working machine, wherein the agricultural working machine accommodates one or more crop material-processing working units and associated with the crop material-processing working units is at least one suction fan for conveying away at least a part of the crop material processed by the working members, wherein the suction fan is operatively connected to a crop material distributing device having crop guide bars which are variable in their position,
**characterised in that**
in a first working position the crop material distributing device (49) receives a first crop material flow (32, 53) and a second crop material flow (50, 53) and discharges same as a common crop material flow (53a, 53b) as a wide deposit and in at least one second working position it does not receive at least one of the crop material flows (50) which are conveyed by the working units (10, 15, 19) and which are to be discharged in swathe form (51) and discharges the at least one received crop material flow (32, 53) in displaced relationship with the at least one non-received crop material flow (50).

12. A method of distributing a crop material flow which is conveyed out of an agricultural working machine according to claim 11 **characterised in that** the at least one first crop material flow (32) is formed substantially by chaff and short straw.

13. A method of distributing a crop material flow which is conveyed out of an agricultural working machine according to claim 11 **characterised in that** the at least one second crop material flow (50) is formed substantially by long straw.

14. A method of distributing a crop material flow which is conveyed out of an agricultural working machine according to one or more of claims 11 to 13 **characterised in that** the displacement of the at least one received crop material flow (32, 53) in relation to the at least one non-received crop material flow (50) is effected transversely with respect to the direction of travel FR into a region in which said at least two crop material flows (32, 53a, 53b, 50) do not influence each other.

15. A method of distributing a crop material flow which is conveyed out of an agricultural working machine according to one or more of claims 11 to 14 **characterised in that** the at least one crop material flow (32, 53) received by the crop material distributing device (49) issues again from the crop material distributing device (49) in the form of a crop material flow (53a, 53b) in a discharge direction (56, 57) which faces transversely with respect to the direction of travel FR.

16. An agricultural working machine for carrying out the method according to claim 11 **characterised in that** the suction fan (37) co-operates with a crop material guide element (41) which is variable in its position relative to the suction fan (37) and at least two mutually adjacent material guide bars (58, 77, 78) of the crop material distributing device (49) by changing their position relative to each other cause the material guide passage (75) disposed between them to close, wherein the material discharge direction (54-57) of the at least one material guide passage (74) adjacent to the closing material guide passage (37) is displaced transversely with respect to the direction of travel FR.

17. An agricultural working machine according to claim 16 **characterised in that** the material guide elements (58, 77, 78) are subdivided into a first group (63) of material guide elements (58, 78) and a second group (64) of material guide elements (58, 77) and at least the respectively adjacent material guide elements (58) of the first and second groups (63, 64) of material guide elements (58) form a closable material guide passage (75) between them.

18. An agricultural working machine according to one or more of claims 16 and 17 **characterised in that** the closable material guide passage (75) is arranged centrally in the crop material distributing device (49).

19. An agricultural working machine according to claim 18 **characterised in that** associated with the closable material guide passage (75) are further material guide bars (77, 78) which are pivotable between at least one engagement position and at least one non-engagement position.

20. An agricultural working machine according to one or more of claims 16 to 19 **characterised in that** the crop material distributing device (49) has a plurality of material guide passages (74-76) which are displaceable from a material discharge direction (54, 55) facing substantially in opposite relationship to the direction of travel FR into a material discharge direction (56, 57) facing transversely with respect to the direction of travel FR and vice-versa.

21. An agricultural working machine according to one or more of claims 16 to 20 **characterised in that** the material guide bars (58, 77, 78) are straight and/or arcuate.

22. An agricultural working machine according to one or more of claims 16 to 21 **characterised in that** the material guide bars (58, 77, 78) are controlled variably in their position by a common coupling mechanism (66).

## Revendications

1. Machine agricole avec au moins une unité de travail qui traite un produit récolté et une première unité de transport de produit récolté associée à ladite unité de traitement et avec au moins une unité supplémentaire de transport de produit récolté, les unités de transport de produit récolté, au nombre d'au moins deux, définissant entre elles une fente de passage de produit, les flux de produit récolté convoyés par les unités de transport de produit récolté présentant des directions de transport opposées et un dispositif de nettoyage comprenant un ventilateur soufflant étant associé aux unités de transport de produit récolté, **caractérisée par le fait qu'**au dispositif de nettoyage (19, 24) et aux unités de transport de produit récolté (15, 21), au nombre d'au moins deux, est associé un ventilateur-extracteur (37) qui est disposé dans la région arrière de manière à produire parallèlement à l'évacuation du flux d'air (31) délivré par le ventilateur soufflant (30), dans la région de la chute (36) entre les unités de transport de produit récolté (15, 21), un flux d'air (44) dirigé vers le ventilateur-extracteur (37).

2. Machine agricole selon la revendication 1, **caractérisée par le fait que** le ventilateur-extracteur (37) est conformé en hacheur de produit récolté (47).

3. Machine agricole selon une ou plusieurs des revendications précédentes, **caractérisée par le fait que** la vitesse du flux d'air (44) produit par le ventilateur extracteur (37) dans la région de la chute (36) entre les unités de transport de produit récolté (15, 21) est réglable.

4. Machine agricole selon la revendication 3, **caractérisée par le fait que** le réglage de la vitesse du flux d'air (44) a lieu en fonction de la nature du produit récolté et/ou du débit.

5. Machine agricole selon la revendication 3, **caractérisée par le fait que** le réglage de la vitesse du flux d'air (44) a lieu par modification de la vitesse de rotation du ventilateur-extracteur.

6. Machine agricole selon une ou plusieurs des revendications précédentes, **caractérisée par le fait que** dans la région de la chute (36) est disposé au moins un dispositif (45) de mesure de vitesse de l'air, connu en soi qui, par l'intermédiaire d'une chaîne de réglage (45, 46, 48, 37), règle la vitesse du flux d'air (44) dans la région de la chute (36).

7. Machine agricole selon la revendication 6, **caractérisée par le fait que** la chaîne de réglage (45, 46, 48, 37) comprend l'entrée d'une valeur de vitesse préréglée X2, la détermination de la vitesse X1 du flux d'air (44) ainsi que l'adaptation de la vitesse X1 du flux d'air (44) à la vitesse préréglée X2.

8. Machine agricole selon la revendication 7, **caractérisée par le fait que** la valeur de vitesse préréglée X2 est définie en fonction de paramètres spécifiques du produit.

9. Machine agricole selon la revendication 8, **caractérisée par le fait que** les paramètres spécifiques du produit sont la nature du produit et/ou l'humidité du produit.

10. Machine agricole selon une ou plusieurs des revendications précédentes, **caractérisée par le fait qu'**un dispositif d'éparpillage (49) de produit récolté est associé au ventilateur-extracteur (37).

11. Procédé pour l'éparpillage d'au moins un flux de produit récolté éjecté d'une machine agricole, la machine agricole comportant une ou plusieurs unités de travail pour le traitement du produit récolté et au moins un ventilateur-extracteur étant associé à l'unité de travail ou aux unités de travail assurant le traitement du produit récolté pour évacuer au moins une partie du produit récolté traité par l'unité de travail, le ventilateur-extracteur coopérant avec un dispositif d'éparpillage de produit récolté pourvu d'éléments de guidage de produit récolté orientables, **caractérisé par le fait que** le dispositif d'éparpillage de produit récolté (49) dans une première position de travail reçoit au moins un premier flux de produit récolté (32, 53) et un deuxième flux de produit récolté (50, 33) et les évacue sous forme de flux de produit commun (53a, 53b) à des fins d'épandage large et dans au moins une deuxième position de travail ne prend pas en charge au moins un des flux de produit (50) transporté par les unités de travail, à épandre sous forme d'andain (51), et achemine le flux de produit (32, 53) pris en charge, au nombre d'au moins un, vers le flux de produit (50) non pris en charge, au nombre d'au moins un.

12. Procédé pour l'éparpillage d'un flux de produit récolté éjecté d'une machine agricole selon la revendication 11, **caractérisé par le fait que** le premier flux de produit récolté (32), au nombre d'au moins un, est essentiellement formé de balle et de pailles courtes.

13. Procédé pour l'éparpillage d'un flux de produit récolté éjecté d'une machine agricole selon la revendication 11, **caractérisé par le fait que** le deuxième flux de produit récolté (50), au nombre d'au moins un, est essentiellement formé de pailles longues.

14. Procédé pour l'éparpillage d'un flux de produit récolté éjecté d'une machine agricole selon au moins une des revendications 11 à 13, **caractérisé par le fait que** le transfert du flux de produit récolté (32, 53) pris en charge, au nombre d'au moins un, vers le flux de produit récolté (50) non pris en charge, au nombre d'au moins un, a lieu transversalement à la direction de déplacement FR dans une zone dans laquelle lesdits flux de produit récolté (32, 53a, 53b, 50), au nombre d'au moins deux, n'interagissent pas l'un sur l'autre.

15. Procédé pour l'éparpillage d'un flux de produit récolté éjecté d'une machine agricole selon au moins une des revendications 11 à 14, **caractérisé par le fait que** le flux de produit récolté (32, 53), au nombre d'au moins un, pris en charge par le dispositif d'éparpillage (49) ressort du dispositif d'éparpillage (49) sous forme de flux de produit récolté (53a, 53b) avec une direction d'éjection (56, 57) transversale à la direction de déplacement FR.

16. Machine agricole pour la mise en oeuvre du procédé selon la revendication 11, **caractérisée par le fait que** le ventilateur-extracteur (37) coopère avec un élément de guidage de produit récolté (41), dont la position par rapport au ventilateur-extracteur (37) est réglable, et qu'au moins deux éléments de guidage de produit (58, 77, 78) voisins l'un de l'autre appartenant au dispositif d'éparpillage de produit récolté (49), par modification de leur position réciproque, provoquent la fermeture du canal de guidage de produit (75) formé entre eux, avec pour conséquence que la direction de transport de produit (54-57) du canal (74) qui se ferme se déplace transversalement à la direction de déplacement FR.

17. Machine agricole pour la mise en oeuvre du procédé selon la revendication 16, **caractérisée par le fait que** les éléments de guidage de produit (58, 77, 78) sont subdivisés en un premier groupe (63) d'éléments de guidage de produit (58, 78) et un deuxième groupe (64) d'éléments de guidage de produit (58, 77) et qu'au moins les éléments de guidage de produit (58) adjacents des premier et deuxième groupes (63, 64) d'éléments de guidage de produit (58) forment entre eux un canal de guidage de produit (75) obturable.

18. Machine agricole pour la mise en oeuvre du procédé selon une ou plusieurs des revendications 16 et 17, **caractérisée par le fait que** le canal de guidage de produit (75) obturable est disposé au centre dans le dispositif d'éparpillage de produit récolté (49).

19. Machine agricole pour la mise en oeuvre du procédé selon la revendication 18, **caractérisée par le fait qu'**au canal de guidage de produit (75) obturable sont associés d'autres éléments de guidage de produit (77, 78) qui peuvent pivoter entre au moins une position active et au moins une position non active.

20. Machine agricole pour la mise en oeuvre du procédé selon une ou plusieurs des revendications 16 à 19, **caractérisée par le fait que** le dispositif d'éparpillage de produit récolté (49) présente une pluralité de canaux de guidage de produit (74, 76) qui peuvent être déplacés d'une position d'évacuation de produit (54, 55) orientée sensiblement à l'opposé de la direction de déplacement FR, dans une position d'évacuation de produit (56, 57) orientée transversalement à la direction de déplacement FR et inversement.

21. Machine agricole pour la mise en oeuvre du procédé selon une ou plusieurs des revendications 16 à 20, **caractérisée par le fait que** les éléments de guidage de produit (58, 77, 78) sont rectilignes et/ou arqués.

22. Machine agricole pour la mise en oeuvre du procédé selon une ou plusieurs des revendications 16 à 21, **caractérisée par le fait que** les éléments de guidage de produit (58, 77, 78) sont commandés par un mécanisme de couplage (66) commun.
